# EUROPÄISCHE PATENTSCHRIFT

(11) **EP 2 591 840 B1**
(45) Veröffentlichungstag und Bekanntmachung des Hinweises auf die Patenterteilung: **20.01.2016**
(21) Anmeldenummer: 12190480.9
(22) Anmeldetag: 30.10.2012
(51) Int. Cl.: B01D 36/00

(54) **Flüssigkeitsfilter**
Liquid filter
Filtre de liquide

(30) Priorität: 09.11.2011 DE 102011085992
(43) Veröffentlichungstag der Anmeldung: 15.05.2013
(73) Patentinhaber: MAHLE International GmbH, 70376 Stuttgart (DE)
(72) Erfinder: Travnik, Peter, 9010 Klagenfurth (AT)
(74) Vertreter: BRP Renaud & Partner mbB Rechtsanwälte Patentanwälte Steuerberater

(56) Entgegenhaltungen:
- EP-A1- 1 702 662
- EP-A1- 2 181 747
- DE-U1-202006 001 950

## Beschreibung

Die vorliegende Erfindung betrifft einen Flüssigkeitsfilter mit einem Filtergehäuse, das einen Aufnahmeraum für ein darin eingesetztes Ringfilterelement zum Filtern einer Flüssigkeit enthält, gemäß dem Oberbegriff des Anspruchs 1.

Aus der EP 2 181 747 A1 ist ein gattungsgemäßes Flüssigkeitsfilter mit einem zentral angeordneten Wasserstandssensor bekannt, der in einen Träger integriert ist, der durch einen Filtergehäusedeckel und einen Innenraum eines Ringfilterelements in einen darunter angeordneten Wassersammelraum hineinragt. Bodenseitig des Wassersammelraums ist ein Leerlaufkanal vorgesehen, der vom Träger verschlossen wird.

Ein weiteres Flüssigkeitsfilter ist beispielsweise aus der WO 2007/090379 A1 bekannt, bei welchem jedoch ein unterhalb eines Ringfilterelements angeordneter Wassersammelraum von einer separat zum Wasserstandssensor ausgebildeten Ablassschraube bodenseitig verschlossen wird.

Aus der EP 1702662 ist ein Filtersystem für Dieselkraftstoff mit einem zentral angeordneten Wasserstandsensor bekannt.

Die vorliegende Erfindung beschäftigt sich mit dem Problem, für ein Flüssigkeitsfilter der gattungsgemäßen Art eine verbesserte oder zumindest eine alternative Ausführungsform anzugeben.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Träger mit integriertem Wasserstandssensor zum Erfassen eines Wasserstands innerhalb eines Wassersammelraums geschützt innerhalb eines Standrohres anzuordnen und dadurch eine besonders robuste Ausführungsform angeben zu können. Das erfindungsgemäße Flüssigkeitsfilter weist dabei in bekannter Weise ein Filtergehäuse mit einem Aufnahmeraum für ein darin eingesetztes Ringfilterelement auf. Unterhalb dieses Ringfilterelements ist ein Wassersammelraum zum Sammeln von aus der Flüssigkeit abgeschiedenem Wasser angeordnet, wobei der Wasserstandssensor in diesen Wassersammelraum hineinragt und oberhalb der tiefsten Stelle des Wassersammelraums angeordnet ist. Zudem ragt der Träger des Wasserstandssensors durch einen Filtergehäusedeckel und einen Innenraum des Ringfilterelements in den Wassersammelraum hinein und besitzt bodenseitig ein Verschlusselement zum Verschließen eines Leerlaufkanals, der wiederum bodenseitig des Wassersammelraums angeordnet ist. Erfindungsgemäß ist nun am Filtergehäusedeckel ein in den Innenraum des Ringfilterelements und zumindest teilweise in den Wassersammelraum hineinragendes Standrohr angeordnet, in dem der Träger des Wasserstandssensors geschützt angeordnet und zugleich geführt ist. Neben der möglichen geschützten Anordnung des Wasserstandssensors innerhalb des Standrohres ist auch eine Montage des Trägers deutlich vereinfacht, da das Standrohr zugleich eine Führung für den Träger des Wasserstandssensors bildet.

Das Standrohr ist einstückig mit dem Filtergehäusedeckel ausgebildet. Durch die einstückige Ausbildung des Standrohres mit dem Filtergehäusedeckel ist eine separate Montage des Standrohres entbehrlich. Zugleich ist die Herstellung des Standrohres vergleichsweise einfach, da dieses in einem gemeinsamen Spritzvorgang zusammen mit dem Filtergehäusedeckel gespritzt werden kann. Die zusätzlichen Herstellungskosten für das Standrohr sind somit marginal.

Bei einer vorteilhaften Weiterbildung der erfindungsgemäßen Lösung ist der Träger des Wasserstandssensors lanzenartig ausgebildet und besitzt eine Ausziehsicherung, die mit einer in dem Standrohr angeordneten Dichtkontur zusammenwirkt und ein Ausziehen des Trägers aus dem Standrohr verhindert. Durch die Ausziehsicherung, die beispielsweise in Form einer an dem Träger angeordneten Rastnase ausgebildet sein kann, die bei einem Ausziehversuch mit der Dichtkontur verrastet, kann ein unbeabsichtigtes und auch ungewolltes Herausziehen des Trägers samt Wasserstandssensor aus dem Flüssigkeitsfilter vermieden werden, dadurch kann beim Wechseln des Filterelementes vermieden werden, dass der Träger verloren geht oder zerstört wird.

Zweckmäßig ist am Filtergehäusedeckel eine Lufteinlasseinrichtung angeordnet. Eine derartige Lufteinlasseinrichtung kann beispielsweise in der Art einer Lufteinlassschraube ausgebildet sein und dient zum gewollten Einlassen von Luft beim Leerlaufenlassen des Flüssigkeitsfilters. Eine derartige Lufteinlassschraube mit einem zugehörigen im Filtergehäusedeckel angeordneten Gewinde kann vergleichsweise kostengünstig ausgebildet sein, wodurch nochmals eine Sicherheitseinrichtung geschaffen werden kann, die ein unbeabsichtigtes Leerlaufenlassen des Flüssigkeitsfilters und damit beispielsweise ein unbeabsichtigtes Kontaminieren der Umgebung verhindert. Zum Ablassen der im Flüssigkeitsfilter angeordneten Flüssigkeit muss demzufolge nicht nur der Träger mit dem Wasserstandssensor mit seinem bodenseitigen Verschlusselement aus dem zugehörigen Leerlaufkanal herausgezogen, sondern zusätzlich auch die Lufteinlassöffnung am Filtergehäusedeckel geöffnet werden.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Dabei zeigen, jeweils schematisch,
- Fig. 1: eine Schnittdarstellung durch ein erfindungsgemäßes Flüssigkeitsfilter,
- Fig. 2: eine Darstellung wie in Fig. 1, jedoch in einer anderen Schnittebene.

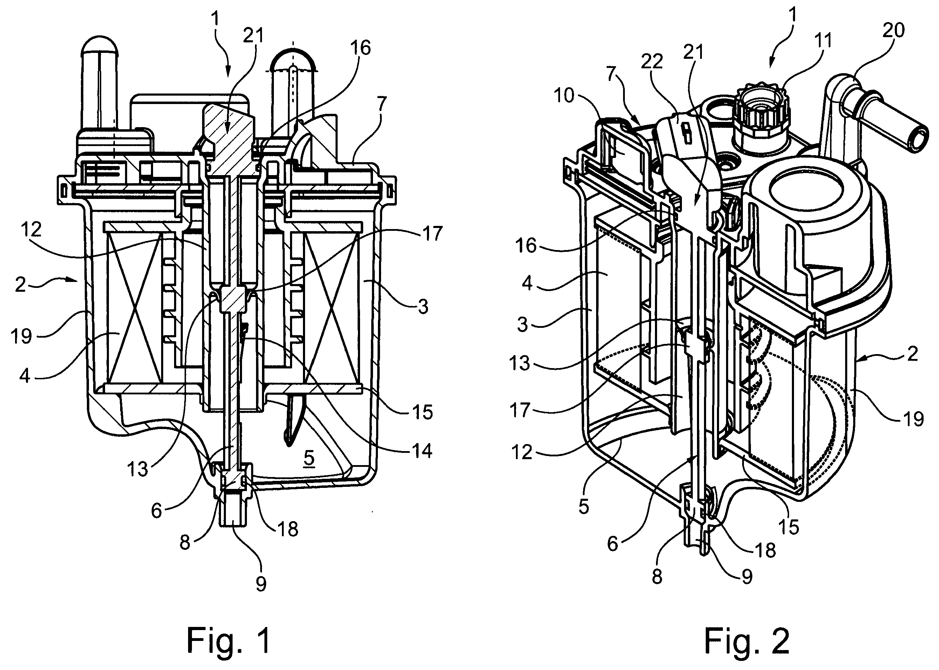

Entsprechend den Fig. 1 und 2, weist ein erfindungsgemäßes Flüssigkeitsfilter 1 ein Filtergehäuse 2 auf, das einen Aufnahmeraum 3 für ein darin eingesetztes Ringfilterelement 4 zum Filtern einer Flüssigkeit, beispielsweise zum Filtern von Kraftstoff oder Schmierstoff, enthält. Unterhalb des Ringfilterelementes 4 ist ein Wassersammelraum 5 zum Sammeln von aus der Flüssigkeit abgeschiedenem Wasser angeordnet, in den ein Wasserstandssensor 6 hineinragt. Der Wasserstandssensor 6 ist dabei in einem Träger 21 integriert, der durch einen Filtergehäusedeckel 7 und einen Innenraum des Ringfilterelementes 4 in den Wassersammelraum 5 geführt ist und bodenseitig ein Verschlusselement 8 zum Verschließen eines Leerlaufkanals 9 trägt. Daher ist der Wasserstandssensor 6 selber nicht zu erkennen. In den Träger 21 können auch weitere Sensoren, wie Druck-, und oder Temperatursensoren integriert sein. An seinem freiliegenden Ende weist der Träger 21 einen Anschluss 22 zum elektrischen Verbinden mit einer Erfassungseinrichtung auf.

Im Filtergehäusedeckel 7 können weitere Funktionselemente, wie beispielsweise eine Heizeinrichtung 10 oder eine Lufteinlasseinrichtung 11 angeordnet sein. Die Lufteinlasseinrichtung 11 ist im gezeigten Fall in Fig. 2 als Lufteinlassschraube ausgebildet und dient zur Luftzufuhr beim Ablassen von in den Flüssigkeitsfilter 1 angeordneter Flüssigkeit. Erfindungsgemäß ist nun am Filtergehäusedeckel 7 ein in den Innenraum des Ringfilterelementes 4 und zumindest teilweise in den Wassersammelraum 5 hineinragendes Standrohr 12 angeordnet, innerhalb welchem der Träger 21 des Wasserstandssensors 6 geführt und dadurch geschützt angeordnet sein kann, je nach der Länge des Standrohres 12 das in den Wassersammelraum 5 hineinragen kann.

Das Standrohr 12 ist einstückig mit dem Filtergehäusedeckel 7 ausgebildet und kann dadurch vergleichsweise kostengünstig und fertigungstechnisch einfach in einem gemeinsamen Spritzvorgang zusammen mit dem Filtergehäusedeckel 7 hergestellt werden.

Betrachtet man die Fig. 1 und 2 weiter, so kann man erkennen, dass im Standrohr 12 eine Dichtkontur 13, vorzugweise ein Dichtkragen 13, angeordnet ist, der dichtend mit dem Träger 21 zusammenwirkt. Im Bereich der Dichtkontur 13 ist am Träger 21 eine Gegendichtkontur angeordnet, z.B. in Form einer Verdickung des Trägers 21. Gleichzeitig kann dort auch eine Ausziehsicherung 14, beispielsweise in der Art eines Rasthakens, angeordnet sein, der ein unbeabsichtigtes Ausziehen des Trägers 21 aus dem Standrohr 12 verhindert. Beim Versuch den Träger 21 aus dem Standrohr 12 auszuziehen, stützt sich die Ausziehsicherung 14 an der Dichtkontur 13 ab. Die Dichtkontur 13 kann beispielsweise in der Art einer Dichtlippe oder einer O-Ring-Dichtung ausgebildet sein.

Das Ringfilterelement 4 besitzt eine untere Endscheibe 15, die eine zentrale Öffnung aufweist, durch die das Standrohr 12 abgedichtet hindurchgeführt ist. Auch hier kann eine Dichtlippe oder O-Ring-Dichtung an der unteren Endscheibe 15 vorgesehen sein, die dichtend mit dem Standrohr 12 zusammenwirkt.

Betrachtet man den Träger 21 des Wasserstandssensors 6 gemäß den Fig. 1 und 2 weiter, so kann erkennen, dass dieser mindestens drei Dichtkonturen 16, 17 und 18 aufweist, von denen die obere und die mittlere Dichtkontur 16, 17 dicht mit dem Standrohr 12 und die untere Dichtkontur 18 dicht mit dem Leerlaufkanal 9 zusammenwirkt. Bei Bedarf können auch mehr Dichtkonturen vorgesehen werden. Die mindestens drei Dichtkonturen 16, 17, 18 sind vorzugsweise axial versetzt zu einander angeordnet und können verschiedene radiale Ausdehnungen haben. Der Träger 21 muss nach seiner Montage am Filtergehäusedeckel 7 durch geeignete Mittel fixiert werden, z.B. durch eine Verrastung oder Verschraubung.

Der gemäß den Fig. 1 und 2 gezeigte Filtergehäusedeckel 7 kann mit einem Filtergehäusetopf 19 verschraubt, verclipst oder verschweißt sein. Am Filtergehäusedeckel 7 kann zusätzlich noch eine Pumpe 20 zum Ansaugen von zu filternder Flüssigkeit angeordnet sein. Die Pumpe 20 ist dabei üblicherweise als einfache und per Hand zu betätigende Hubkolbenpumpe ausgebildet.

Zum Ablassen der in dem Flüssigkeitsfilter 1 angeordneten Flüssigkeit und insbesondere zum Ablassen des sich im Wassersammelraum 5 gesammelten Wassers, wird der Träger 21 des Wasserstandssensors 6 nach oben aus dem Filtergehäusedeckel 7 ausgezogen, bis das Verschlusselement 8 aus dem Leerlaufkanal 9 herausgezogen und dadurch der Leerlauf freigegeben ist. Um den Ablassvorgang zu beschleunigen, kann zusätzlich die Lufteinlasseinrichtung 11 am Filtergehäusedeckel 7 geöffnet und dadurch ein Nachströmen von Luft ermöglicht werden. Durch die mögliche geschützte Anordnung des Trägers 21 des Wasserstandssensors 6 innerhalb des Standrohrs 12 kann der Wasserstandssensor 6 selber innerhalb des Standrohres 12 liegen und wird dadurch vor äußeren Einwirkungen geschützt. Dadurch ist der Träger 21 nicht nur besonders sicher und geschützt angeordnet, sondern zugleich durch das Standrohr 12 auch geführt, beispielsweise im Bereich der oberen Dichtkontur 16 und der mittleren Dichtkontur 17. Mit seinem Verschlusselement 8 greift er bodenseitig in den Leerlaufkanal 9 ein, wodurch zusätzlich nochmals eine Führung gegeben ist. Der Träger 21 weist ein gewisses axiales Spiel auf, um mögliche Fertigungstoleranzen ausgleichen zu können.

## Patentansprüche

1. Flüssigkeitsfilter (1)
- mit einem Filtergehäuse (2), das einen Aufnahmeraum (3) für ein darin eingesetztes Ringfilterelement (4) zum Filtern einer Flüssigkeit enthält,
- mit einem unterhalb des Ringfilterelements (4) angeordneten Wassersammelraum (5) zum Sammeln von aus der Flüssigkeit abgeschiedenem Wasser,
- mit einem Wasserstandssensor (6), der oberhalb der tiefsten Stelle des Wassersammelraums (5) angeordnet ist,
- wobei der Wasserstandssensor (6) in einen Träger (21) integriert ist, der durch einen Filtergehäusedeckel (7) und einen Innenraum des Ringfilterelements (4) in den Wassersammelraum (5) ragt,
- wobei am Filtergehäusedeckel (7) ein in den Innenraum des Ringfilterelements (4) und zumindest teilweise in den Wassersammelraum (5) hineinragendes Standrohr (12) angeordnet ist, innerhalb welchem der Träger (21) mit dem Wasserstandssensor (6) geführt ist,
**dadurch gekennzeichnet, dass**
- das Standrohr (12) bodenseitig ein Verschlusselement (8) zum Verschließen eines Leerlaufkanals (9) aufweist,
- das Standrohr (12) einstückig mit dem Filtergehäusedeckel (7) ausgebildet ist.

2. Flüssigkeitsfilter nach Anspruch 1,
**dadurch gekennzeichnet,**
**dass** im Standrohr (12) eine Dichtkontur, vorzugsweise einen Dichtkragen (13) angeordnet ist, die dichtend mit dem Träger (21) zusammenwirkt.

3. Flüssigkeitsfilter nach Anspruch 1 oder 2,
**dadurch gekennzeichnet,**
**dass** das Ringfilterelement (4) eine untere Endscheibe (15) aufweist, die eine zentrale Öffnung besitzt, durch die das Standrohr (12) abgedichtet geführt ist.

4. Flüssigkeitsfilter nach einem der Ansprüche 1 bis 3,
**dadurch gekennzeichnet,**
**dass** der Träger (21) drei Dichtkonturen (16,17,18) aufweist, von denen die obere und die mittlere Dichtkontur (16,17) dicht mit dem Standrohr (12) und die untere Dichtkontur (18) dicht mit dem Leerlaufkanal (9) zusammenwirkt.

5. Flüssigkeitsfilter nach einem der Ansprüche 2 bis 4,
**dadurch gekennzeichnet,**
**dass** der Träger (21) des Wasserstandssensors (6) lanzenartig ausgebildet ist und eine Ausziehsicherung (14) aufweist, die mit der Dichtkontur zusammenwirkt und ein Ausziehen des Trägers (21) samt Wasserstandssensor (6) aus dem Standrohr (12) verhindert.

6. Flüssigkeitsfilter nach einem der Ansprüche 1 bis 5,
**dadurch gekennzeichnet,**
**dass** der Filtergehäusedeckel (7) dicht mit einem Filtergehäusetopf (19) verschraubt, verclipst oder verschweißt ist.

7. Flüssigkeitsfilter nach einem der Ansprüche 1 bis 6,
**dadurch gekennzeichnet,**
**dass** am Filtergehäusedeckel (7) eine Lufteinlasseinrichtung (11) vorgesehen ist.

8. Flüssigkeitsfilter nach einem der Ansprüche 1 bis 7,
**dadurch gekennzeichnet,**
**dass** das Flüssigkeitsfilter (1) als Kraft- oder Schmierstofffilter in einem Verbrennungsmotor eines Kraftfahrzeugs ausgebildet ist.

## Claims

1. Liquid filter (1) comprising
- a filter housing (2), which contains a holding space (3) for a ring filter element (4) inserted therein for filtering a liquid,
- a water collecting chamber (5) arranged underneath the ring filter element (4) for collecting water separated from the liquid,
- a water-level sensor (6), which is arranged above the deepest point of the water collecting chamber (5),
- wherein the water-level sensor (6) is integrated into a support (21), which projects through a filter housing cover (7) and an inner chamber of the ring filter element (4) into the water collecting chamber (5),
- wherein on the filter housing cover (7) a standpipe (12) is arranged projecting into the inner chamber of the ring filter element (4) and at least partly into the water collecting chamber (5), inside which the support (21) with the water-level sensor (6) is guided, **characterised in that**
- the standpipe (12) at the bottom comprises a closing element (8) for closing an idle channel (9),
- the standpipe (12) is designed in one piece with the filter housing cover (7).

2. Liquid filter according to claim 1, **characterised in that** in the standpipe (12) a sealing contour, preferably a sealing collar (13), is arranged which cooperates in a sealing manner with the support (21).

3. Liquid filter according to either claim 1 or claim 2, **characterised in that** the ring filter element (4) comprises a lower end disc (15) with a central opening, through which the standpipe (12) is guided in a sealed manner.

4. Liquid filter according to any one of claims 1 to 3, **characterised in that** the support (21) comprises three sealing contours (16, 17, 18), of which the upper and middle sealing contour (16, 17) cooperate tightly with the standpipe (12) and the lower sealing contour (18) cooperates tightly with the idle channel (9).

5. Liquid filter according to any one of claims 2 to 4, **characterised in that** the support (21) of the water-level sensor (6) is designed to be lance-like and comprises a pull-out protection (14), which cooperates with the sealing contour and prevents the pulling out of the support (21) with the water-level sensor (6) from the standpipe (12).

6. Liquid filter according to any one of claims 1 to 5, **characterised in that** the filter housing cover (7) is screwed, clipped or welded tightly to a filter housing pan (19).

7. Liquid filter according to any one of claims 1 to 6, **characterised in that** an air inlet device (11) is provided on the filter housing cover (7).

8. Liquid filter according to any one of claims 1 to 7, **characterised in that** the liquid filter (1) is designed as a fuel or lubricant filter in a combustion engine of a motor vehicle.

## Revendications

1. Filtre de liquide (1) comprenant
- un boîtier de filtre (2), qui contient un espace de logement (3) pour un élément filtrant annulaire (4) inséré dedans, servant à filtrer un liquide,
- un espace collecteur d'eau (5) disposé sous l'élément filtrant annulaire (4), servant à collecter de l'eau séparée du liquide,
- un capteur de niveau d'eau (6), qui est disposé au-dessus de l'emplacement le plus profond de l'espace collecteur d'eau (5),
- le capteur de niveau d'eau (6) étant intégré dans un support (21), qui dépasse dans l'espace collecteur d'eau (5) à travers un couvercle de boîtier de filtre (7) et un espace intérieur de l'élément filtrant annulaire (4),
- un tuyau vertical (12) dépassant à l'intérieur de l'espace intérieur de l'élément filtrant annulaire (4) et au moins en partie à l'intérieur de l'espace collecteur d'eau (5) étant disposé au niveau du couvercle de boîtier de filtre (7), à l'intérieur duquel tuyau vertical le support (21) pourvu du capteur de niveau d'eau (6) est guidé,
**caractérisé en ce**
- **que** le tuyau vertical (12) présente côté sol un élément de fermeture (8) servant à fermer un canal de vidange (9),
- en ce que le tuyau vertical (12) est réalisé d'un seul tenant avec le couvercle de boîtier de filtre (7).

2. Filtre de liquide selon la revendication 1,
**caractérisé en ce**
**qu'**un contour d'étanchéité, de préférence un collet d'étanchéité (13), est disposé dans le tuyau vertical (12), lequel coopère de manière à assurer l'étanchéité avec le support (21).

3. Filtre de liquide selon la revendication 1 ou 2,
**caractérisé en ce**
**que** l'élément filtrant annulaire (4) présente un disque d'extrémité (15) inférieur, qui possède une ouverture centrale, à travers laquelle le tuyau vertical (12) est guidé de manière étanchéifiée.

4. Filtre de liquide selon l'une quelconque des revendications 1 à 3,
**caractérisé en ce**
**que** le support (21) présente trois contours d'étanchéité (16, 17, 18), parmi lesquels le contour d'étanchéité supérieur et le contour d'étanchéité intermédiaire (16, 17) coopèrent de manière étanche avec le tuyau vertical (12) et le contour d'étanchéité inférieur (18) coopère de manière étanche avec le canal de vidange (9).

5. Filtre de liquide selon l'une quelconque des revendications 2 à 4,
**caractérisé en ce**
**que** le support (21) du capteur de niveau d'eau (6) est réalisé à la manière d'une lance et présente un système de sécurité anti-extraction (14), qui coopère avec le contour d'étanchéité et qui empêche toute extraction du support (21), y compris du capteur de niveau d'eau (6), du tuyau vertical (12).

6. Filtre de liquide selon l'une quelconque des revendications 1 à 5,
**caractérisé en ce**
**que** le couvercle de boîtier de filtre (7) est vissé, clipsé ou soudé de manière étanche à un pot de boîtier de filtre (19).

7. Filtre de liquide selon l'une quelconque des revendications 1 à 6,
**caractérisé en ce**
**qu'**un système d'entrée d'air (11) est prévu au niveau du couvercle de boîtier de filtre (7).

8. Filtre de liquide selon l'une quelconque des revendications 1 à 7,
**caractérisé en ce**
**que** le filtre de liquide (1) est réalisé sous la forme d'un filtre à carburant ou à lubrifiant dans un moteur à combustion interne d'un véhicule automobile.
